# EUROPÄISCHE PATENTSCHRIFT

(11) **EP 3 871 329 B1**
(45) Veröffentlichungstag und Bekanntmachung des Hinweises auf die Patenterteilung: **25.01.2023**
(21) Anmeldenummer: 19794877.1
(22) Anmeldetag: 01.10.2019
(51) Int. Cl.: H02M 3/158

(54) **WANDLER, ANTRIEBSSYSTEM MIT WANDLER UND VERFAHREN ZUM BETREIBEN EINES WANDLERS**
CONVERTER, DRIVE SYSTEM HAVING CONVERTER, AND METHOD FOR OPERATING A CONVERTER
CONVERTISSEUR, SYSTÈME D'ENTRAÎNEMENT COMPRENANT UN CONVERTISSEUR ET PROCÉDÉ POUR FAIRE FONCTIONNER UN CONVERTISSEUR

(30) Priorität: 22.10.2018 DE 102018008315
(43) Veröffentlichungstag der Anmeldung: 01.09.2021
(73) Patentinhaber: SEW-EURODRIVE GmbH & Co. KG, 76646 Bruchsal (DE)
(72) Erfinder: ADAVI, Karamat, 88255 Baindt (DE); KESSLER, Christian, 88239 Wangen - Primisweiler (DE)
(86) Internationale Anmeldenummer: PCT/EP2019/025326
(87) Internationale Veröffentlichungsnummer: WO 2020/083519

(56) Entgegenhaltungen:
- US-A- 5 894 214
- US-A1- 2013 049 620

## Beschreibung

Die Erfindung betrifft einen Wandler, ein Antriebssystem mit Wandler und ein Verfahren zum Betreiben eines Wandlers.

Es ist allgemein bekannt, dass ein Hochsetzsteller aus einer eingangsseitig anliegenden Spannung ausgangsseitig eine höhere Spannung bereitstellt.

**Aus der nachveröffentlichten** US 2018 / 0 323 713 A1 **ist eine weich schaltende Hochfrequenz-Leistungswandlung bekannt geworden.**

**Aus der** US 6 002 241 A **ist ein Split-Boost-Konverter mit hoch liegendem Kondensator bekannt.**

**Aus der** AT 412 376 B **ist eine modifizierte Variante eines Split-Boost-Konverters bekannt.**

**Aus der** US 2013 / 049620 A1 **ist als nächstliegender Stand der Technik eine Beleuchtungsanordnung bekannt.**

**Aus der** US 5 894 214 A **ist ein Wandler bekannt.**

Der Erfindung liegt daher die Aufgabe zugrunde, einen Wandler zur ausgangsseitigen Bereitstellung einer Gleichspannung in kostengünstiger Weise weiterzubilden.

Erfindungsgemäß wird die Aufgabe bei dem Wandler nach den in Anspruch 1, bei dem Antriebssystem nach den in Anspruch 7 und bei dem Verfahren nach den in Anspruch 8 angegebenen Merkmalen gelöst.

Wichtige Merkmale der Erfindung bei dem Wandler, Insbesondere DC/DC-Wandler, mit eingangsseitigem und ausgangsseitigem Anschluss sind, dass der Wandler am eingangsseitigen Anschluss mit einer Eingangsspannung Ui gespeist wird und am ausgangsseitigen Anschluss eine Ausgangsspannung U0 zur Verfügung stellt,
wobei am ausgangsseitigen Anschluss eine ausgangsseitige Kapazität C0, insbesondere ein Elektrolytkondensator, angeschlossen ist,
wobei der Wandler eine Induktivität aufweist, welche zwischen einem ersten Potential des eingangsseitigen Anschlusses und einem ersten Potential des ausgangsseitigen Anschlusses angeordnet ist,
wobei mittels eines ersten steuerbaren Schalters M1 das zweite Potential des ausgangsseitigen Anschlusses über zumindest eine zweite Diode D2 mit dem zweiten Potential des eingangsseitigen Anschlusses verbindbar ist,
wobei mittels eines zweiten steuerbaren Schalters das erste Potential des ausgangsseitigen Anschlusses mit dem zweiten Potential des eingangsseitigen Anschlusses verbindbar ist,
wobei eine erste Diode D1 mit der zweiten Diode D2 in Reihe derart geschaltet ist und diese Reihenschaltung, insbesondere gebildet aus der ersten und zweiten Diode, zwischen dem zweiten Potential des ausgangsseitigen Anschlusses und dem ersten Potential des eingangsseitigen Anschlusses derart angeordnet ist, dass abhängig von der Differenz des zweiten Potentials des ausgangsseitigen Anschlusses zum ersten Potential des eingangsseitigen Anschlusses ein Stromfluss vom zweiten Potential des ausgangsseitigen Anschlusses zum ersten Potential des eingangsseitigen Anschlusses möglich ist.

Von Vorteil ist dabei, dass die steuerbaren Schalter auf demselben Potential wie die Steuerelektronik oder Signalelektronik anordenbar sind. Somit ist keine galvanische Entkopplung der Ansteuersignale notwendig. Außerdem ist ein Hochsetzsteller oder alternativ auch ein Tiefsetzstellerbetrieb des Wandlers ermöglicht. Somit ist ein weiter Bereich von Eingangsspannungen verwendbar und als Ausgangsspannung eine möglichst konstante Spannung bereit stellbar, auch wenn eingangsseitig große Schwankungen auftreten.

Dererste steuerbare Schalter M1 bildet mit der ersten Diode D1 eine Reihenschaltung, welche am eingangsseitigen Anschluss angeordnet und aus der Eingangsspannung gespeist ist. Von Vorteil ist dabei, dass die Reihenschaltung aus der Eingangsspannung versorgbar ist. Dabei ist der erste steuerbare Schalter auf dem unteren Potential der Eingangsspannung anordenbar, also auf demselben Potential wie auch der zweite steuerbare Schalter. Somit ist eine galvanische Entkopplung einsparbar.

Bei einer vorteilhaften Ausgestaltung sind der erste steuerbare Schalter und der zweite steuerbare Schalter auf dem zweiten Potential des eingangsseitigen Anschlusses des Wandlers angeordnet und/oder auf demselben Potential wie ein Anschlusselement einer eine Reglereinheit aufweisende Steuerelektronik, welche das Ansteuersignal für den ersten steuerbaren Schalter und das Ansteuersignal für den zweiten steuerbaren Schalter erzeugt. Von Vorteil ist dabei, dass galvanische Entkopplungen einsparbar sind.

Bei einer vorteilhaften Ausgestaltung weisen ein Anschlusselement des ersten steuerbaren Schalters und ein Anschlusselement des zweiten Steuerelements das zweite Potential auf und ein Anschlusselement der eine Reglereinheit aufweisenden Steuerelektronik, welche das Ansteuersignal für den ersten steuerbaren Schalter und das Ansteuersignal für den zweiten steuerbaren Schalter erzeugt, weist ebenfalls das zweite Potential auf. Von Vorteil ist dabei, dass eine galvanische Entkopplung nicht notwendig ist, da die Steuerspannungen im Kleinspannungsbereich, insbesondere also unter 50 Volt, liegen und die Eingangsspannung und/oder Ausgangsspannung über 200 Volt liegen dürfen, insbesondere über 600 Volt.

Bei einer vorteilhaften Ausgestaltung ist am eingangsseitigen Anschluss des Wandlers eine als Folienkondensator ausgeführte Kapazität angeordnet. Von Vorteil ist dabei, dass die eingangsseitigen Spannungsripple nicht gepuffert sind, insbesondere nicht ausreichend gepuffert sind.

Bei einer vorteilhaften Ausgestaltung wird die Pulsweitenmodulationsfrequenz als Funktion des Verhältnisses von Eingangsspannung zur Ausgangsspannung verändert. Von Vorteil ist dabei, dass eine schnellere Erreichung des Regelziels ermöglicht ist, insbesondere auch eine verbesserte Regelgüte.

Die Steuerelektronik ist derart ausgestaltet, dass:
- entweder dem ersten steuerbaren Schalter ein pulsweitenmoduliertes Ansteuersignal zugeführt wird, wobei das Pulsweitenmodulationsverhältnis von der Reglereinheit derart gestellt wird, dass die Ausgangsspannung auf einen, insbesondere als Parameter des DC/DC-Wandlers, Sollwert hingeregelt wird und wobei der zweite steuerbare Schalter dauerhaft geöffnet ist, wenn die Ausgangsspannung größer als der Sollwert ist,
- oder dem zweiten steuerbaren Schalter ein pulsweitenmoduliertes Ansteuersignal zugeführt wird, wobei das Pulsweitenmodulationsverhältnis von der Reglereinheit derart gestellt wird, dass die Ausgangsspannung auf den Sollwert hingeregelt wird und wobei der erste Schalter dauerhaft geschlossen ist, wenn die Ausgangsspannung kleiner als der Sollwert ist,
- oder der erste steuerbare Schalter dauerhaft geschlossen ist und der zweite Schalter dauerhaft geöffnet ist, wenn die Ausgangsspannung ein zulässiges Maß an Abweichung vom Sollwert nicht überschreitet.

Von Vorteil ist dabei, dass wahlweise ein Hochsetzstellerbetrieb oder ein Tiefsetzstellerbetrieb oder ein Filterbetrieb ermöglicht ist, insbesondere abhängig von der Differenz der Eingangsspannung zur Ausgangsspannung.

Bei einer vorteilhaften Ausgestaltung ist der Wandler ein DC/DC-Wandler. Von Vorteil ist dabei, dass ausgangsseitig eine stabilere Spannung bereit stellbar ist.

Wichtige Merkmale des Antriebssystems mit Wandler sind, dass der eingangsseitige Anschluss des Wandlers parallel verbunden ist mit dem gleichspannungsseitigen Anschluss eines oder mehrerer Wechselrichter des Antriebssystems, insbesondere welche jeweils einen Elektromotor speisen, und/oder mit dem gleichspannungsseitigen Anschluss eines netzgespeisten Gleichrichters des Antriebssystems.

Von Vorteil ist dabei, dass bei motorischem Betrieb eine tiefe und bei generatorischem Betrieb eine hohe Eingangsspannung bereitgestellt ist und trotzdem ausgangsseitig eine Sollspannung erzeugt wird, aus der dann eine Steuerspannung von beispielsweise 24 Volt ableitbar oder bereitstellbar ist. Eingangsseitig schwankt die Spannung beispielsweise mit einem Spannungsripple von 300 Hertz infolge des netzgespeisten, also mit Drehspannung gespeisten, dreiphasigen Gleichrichters, weil nur ein Folienkondensator für die Eingangsspannung verwendet wird, der nicht einmal einen einzigen der Spannungsripple puffern kann.

Wichtige Merkmale des Verfahrens zum Betreiben eines Wandlers sind, dass der Wandler eine Induktivität aufweist, welche zwischen einem ersten Potential des eingangsseitigen Anschlusses und einem ersten Potential des ausgangsseitigen Anschlusses angeordnet ist,
wobei
mittels eines ersten steuerbaren Schalters M1 das zweite Potential des ausgangsseitigen Anschlusses über zumindest eine zweite Diode D2 mit dem zweiten Potential des eingangsseitigen Anschlusses verbindbar ist,
wobei mittels eines zweiten steuerbaren Schalters das erste Potential des ausgangsseitigen Anschlusses mit dem zweiten Potential des eingangsseitigen Anschlusses verbindbar ist,
wobei
   - entweder dem ersten steuerbaren Schalter ein pulsweitenmoduliertes Ansteuersignal zugeführt wird, wobei das Pulsweitenmodulationsverhältnis von der Reglereinheit derart gestellt wird, dass die Ausgangsspannung auf einen, insbesondere als Parameter des DC/DC-Wandlers, Sollwert hingeregelt wird und wobei der zweite steuerbare Schalter dauerhaft geöffnet ist, wenn die Ausgangsspannung größer als der Sollwert ist,
   - oder dem zweiten steuerbaren Schalter ein pulsweitenmoduliertes Ansteuersignal zugeführt wird, wobei das Pulsweitenmodulationsverhältnis von der Reglereinheit derart gestellt wird, dass die Ausgangsspannung auf den Sollwert hingeregelt wird und wobei der erste Schalter dauerhaft geschlossen ist, wenn die Ausgangsspannung kleiner als der Sollwert ist,
   - oder der erste steuerbare Schalter dauerhaft geschlossen ist und der zweite Schalter dauerhaft geöffnet ist, wenn die Ausgangsspannung ein zulässiges Maß an Abweichung vom Sollwert nicht überschreitet.

Von Vorteil ist dabei, dass eingangsseitig ein weiter Bereich von Spannung zulässig ist und dabei entweder Hochsetzstellerbetrieb, Tiefsetzstellerbetrieb oder nur passives Filtern ausgeführt wird - abhängig von der Abweichung der Eingangsspannung von der Ausgangsspannung.

Bei einer vorteilhaften Ausgestaltung wird die Pulsweitenmodulationsfrequenz als Funktion des Verhältnisses der ausgangsseitigen Spannung U0 zur eingangsseitigen Spannung Ui verändert. Von Vorteil ist dabei, dass nur bei Abweichungen der Spannungen voneinander der Regeleingriff stark ist. Beim Minimum selbst ist nur eine sehr niedrige Pulsweitenmodulationsfrequenz notwendig, so dass hier auch die Verluste gering bleiben.

Bei einer vorteilhaften Ausgestaltung weist die Funktion ein Minimum auf, wenn das Verhältnis den Wert Eins erreicht, insbesondere also die ausgangsseitige Spannung U0 der eingangsseitigen Spannung Ui gleicht. Von Vorteil ist dabei, dass beim Minimum kein besonders hoher Aufwand notwendig ist. Trotzdem wird beim Minimum eine nicht verschwindende Pulsweitenmodulationsfrequenz verwendet, damit bei Abweichungen genügend schnell reagiert wird und möglichst schnell auf den Sollwert hingeregelt wird.

Bei einer vorteilhaften Ausgestaltung ist die Funktion eine konvexe Funktion, insbesondere eine streng konvexe Funktion. Von Vorteil ist dabei, dass eine verbesserte Regelung erreichbar ist und insbesondere ein noch größerer Frequenzabstand von Pulsweitenmodulationsfrequenzen von am Wandler eingangsseitig angeschlossenen Wechselrichtern erreichbar ist und somit ein verbessertes Regeln ausführbar ist. Die bei höheren Frequenzen erzeugten Verluste sind aber bei Erreichen des Minimums vermeidbar. Je weiter die Eingangsspannung von der Ausgangsspannung sich unterscheidet, desto höher ist die PWM-Frequenz. Die Eingangsspannung ist in einem großen Bereich variabel, weil eingangsseitig Wechselrichtergespeiste Motoren generatorisch oder motorisch betreibbar sind.

Bei einer vorteilhaften Ausgestaltung ist die Funktion eine stetig differenzierbare Funktion. Von Vorteil ist dabei, dass die Regelgüte verbesserbar ist und unkontrollierbare Zustände beim Regeln vermeidbar sind.

Die Erfindung betrifft eine Vorrichtung gemäß Anspruch 1 und ein Verfahren gemäß Anspruch 8. Weitere Vorteile ergeben sich aus den Unteransprüchen.

Die Erfindung wird nun anhand von schematischen Abbildungen näher erläutert:

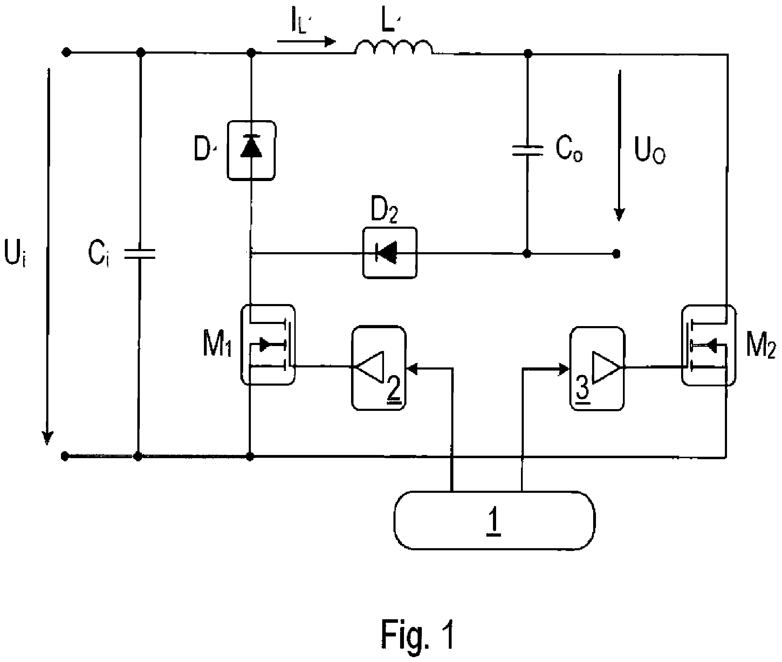

In der Figur 1 ist ein erfindungsgemäßer DC/DC-Wandler schematisch skizziert.

Hierbei liegt am eingangsseitigen Anschluss des DC/DC-Wandlers eine Eingangsspannung Ui an, wobei am eingangsseitigen Anschluss auch eine Kapazität Ci angeschlossen ist. Vorzugsweise ist die Kapazität Ci als Folienkondensator ausgeführt.

Das obere Potential des eingangsseitigen Anschlusses ist über eine Induktivität L1 mit dem oberen Potential des ausgangsseitigen Anschlusses des DC/DC-Wandlers verbunden, wobei die Induktivität L1 vom Strom IL1 durchflossen ist.

Eine vorzugsweise als Elektrolytkondensator ausgeführte Kapazität C0 ist am ausgangsseitigen Anschluss des DC/DC-Wandlers angeschlossen, so dass eine geglättete Ausgangsspannung zur Verfügung stellbar ist.

Insbesondere wirkt auch die Induktivität L1 zusammen mit der Kapazität C0 als Filter, insbesondere also Tiefpassfilter.

Das oberen Potential des ausgangsseitigen Anschlusses des DC/DC-Wandlers ist mittels eines zweiten steuerbaren Schalters M2 mit dem unteren Potential des eingangsseitigen Anschlusses elektrisch verbindbar oder von diesem elektrisch trennbar. Insbesondere ist der Source-Anschluss des zweiten steuerbaren Schalters M2 mit dem oberen Potential des ausgangsseitigen Anschlusses verbunden.

Bei weiteren erfindungsgemäßen Ausführungsbeispielen wird mit dem oberen Potential des ausgangsseitigen Anschlusses des DC/DC-Wandlers der Source-Anschluss des zweiten steuerbaren Schalters versorgt. Der Drain-Anschluss des zweiten steuerbaren Schalters ist mit dem unteren Potential des eingangsseitigen Anschlusses des DC/DC-Wandlers verbunden.

Ein erster steuerbarer Schalter M1 ist in Reihe mit einer Diode D1 angeordnet, wobei diese Reihenschaltung aus dem eingangsseitigen Anschluss des DC/DC-Wandlers versorgt ist. Der

Source-Anschluss des ersten steuerbaren Schalters ist mittels einer Diode D2 mit dem unteren Potential des ausgangsseitigen Anschlusses des DC/DC-Wandlers verbunden. Somit kann Strom vom unteren Potential des ausgangsseitigen Anschlusses des DC/DC-Wandlers über die Diode D2 und den ersten steuerbaren Schalter M1 zum unteren Potential des eingangsseitigen Anschlusses, wenn der erste steuerbar Schalter M1 leitend ist.

Falls der erste steuerbare Schalter M1 dauerhaft geöffnet ist und der der zweite steuerbare Schalter M2 getaktet, insbesondere pulsweitenmoduliert getaktet, betrieben ist, kann der aus der Induktivität L1 austretende Strom durch den zweiten steuerbaren Schalter M2 zum unteren Potential des eingangsseitigen Anschlusses abfließen, wenn der zweite steuerbare Schalter M2 im leitenden Zustand ist. Wenn der zweite steuerbare Schalter M2 geöffnet ist, fließt der aus der Induktivität austretende Strom in den Kondensator C0 und lädt diesen somit auf.

Zur Bereitstellung einer höheren Spannung wird also dieser so beschriebene Hochsetzstellerbetrieb durchgeführt, wobei der erste steuerbare Schalter M1 dauerhaft geöffnet und der zweite steuerbare Schalter M2 pulsweitenmoduliert angesteuert wird.

Das zugehörige pulsweitenmodulierte Ansteuersignal für den zweiten steuerbaren Schalter M2 wird von einer Reglereinheit 1, insbesondere PWM-Controller, derart erzeugt, dass die ausgangsseitig erfasste Spannung U0 auf einen vorgegebenen Sollwert, beispielsweise 400 Volt, hin geregelt wird. Die Reglereinheit 1 stellt hierzu das Pulsweitenmodulationsverhältnis des Ansteuersignals, welches über einen Treiber 3 an den Steuereingang, insbesondere Gate, des zweiten steuerbaren Schalters M2 geführt wird.

Dieser Betrieb des erfindungsgemäßen DC/DC-Wandlers als Hochsetzsteller wird allerdings nur solange ausgeführt, so lange die eingangsseitig anliegende Spannung Ui größer ist als der um eine Differenzspannung vergrößerte Sollwert. Vorzugsweise beträgt die Differenzspannung 5 Volt.

ist jedoch die eingangsseitig anliegende Spannung Ui kleiner ist als der um eine Differenzspannung verminderte Sollwert, wird ein Tiefsetzstellerbetrieb des erfindungsgemäßen DC/DC-Wandlers ausgeführt, bei welchem der zweite steuerbare Schalter M2 dauerhaft geöffnet bleibt und der erste steuerbare Schalter M1 pulsweitenmoduliert angesteuert wird.

Das zugehörige pulsweitenmodulierte Ansteuersignal für den ersten steuerbaren Schalter M1 wird von der Reglereinheit 1, insbesondere PWM-Controller, derart erzeugt, dass die ausgangsseitig erfasste Spannung U0 auf den vorgegebenen Sollwert, beispielsweise 400 Volt, hin geregelt wird. Die Reglereinheit 1 stellt hierzu das Pulsweitenmodulationsverhältnis des Ansteuersignals für den ersten steuerbaren Schalter M1, welches über einen Treiber 2 an den Steuereingang, insbesondere Gate, des ersten steuerbaren Schalters M1 geführt wird.

Die Pulsweitenmodulationsfrequenz f, beispielsweise 100 kHz, wird beim Hochsetzsteller und beim Tiefsetzstellerbetrieb konstant belassen.

Wenn die ausgangsseitige Spannung U0 nur maximal um den Betrag der Differenz vom Sollwert abweicht, beispielsweise also zwischen 395 Volt und 405 Volt liegt, **wird der zweite Schalter M2 geöffnet und der erste Schalter M1 geschlossen.** Somit leitet dann die Induktivität den ausgangsseitig benötigten Strom nur durch und wirkt mit der Kapazität C0 zusammen als Filter, insbesondere Tiefpassfilter.

Die Diode D1 ist derart angeordnet, dass ein Stromfluss vom oberen Potential des eingangsseitigen Anschlusses des DC/DC-Wandlers durch die Diode D1 zum ersten steuerbaren Schalter M1 nicht möglich ist.

Besonderer Vorteil des erfindungsgemäßen DC/DC-Wandlers ist, dass beide steuerbaren Schalter (M1, M2) auf dem unteren Potential des eingangsseitigen Anschlusses des DC/DC-Wandlers angeordnet sind. Somit muss die Ansteuerung, insbesondere der jeweilige Treiber (2, 3), nicht über eine galvanische Entkopplung angesteuert werden, sondern die Reglereinheit 1 ist galvanisch mit den Treibern 2 und 3 sowie mit den beiden steuerbaren Schaltern M1 und M2 galvanisch verbunden, insbesondere obwohl die Eingangsspannung Ui und die ausgangsseitige Spannung U0 weit über 50 Volt liegen kann, insbesondere bei 400 Volt.

Die beiden steuerbaren Schalter (M1, M2) sind vorzugsweise als MOSFET, insbesondere aus Silizium-Carbid, ausgeführt.

Die Eingangsspannung Ui wird von einem Zwischenkreis bereitgestellt, welcher Spannungswerte zwischen 50 Volt und 800 Volt aufweisen kann. Dabei ist die Spannung abhängig von dem eingespeisten Strom der an den Zwischenkreis angeschlossenen Geräte.

Eines dieser Geräte ist ein netzgespeister Gleichrichter, dessen gleichspannungsseitiger Anschluss mit dem Zwischenkreis verbunden ist. Außerdem sind am Zwischenkreis die gleichspannungsseitigen Anschlüsse von Wechselrichtern angeordnet. Jeder der Wechselrichter speist mit seinem wechselspannungsseitigen Anschluss einen Elektromotor. Da am Zwischenkreis nur Folienkondensatoren aber keine Elektrolytkondensatoren angeschlossen sind, ist die am Zwischenkreis anliegende Spannung nicht abgepuffert und kann daher bis auf 50 Volt einbrechen oder bei genügend starker Leistungszufuhr von einem oder mehreren generatorisch betriebenen Elektromotoren bis auf 800 Volt steigen.

Bei weiteren erfindungsgemäßen Ausführungsbeispielen wir die Pulsweitenmodulationsfrequenz nicht konstant gehalten, sondern als Funktion des Verhältnisses der ausgangsseitigen Spannung U0 zur eingangsseitigen Spannung Ui verändert. Dabei weist die Funktion ein Minimum bei 1 auf, also bei U0 = Ui. Vorzugsweise weist die Taylorentwicklung der Funktion um das Minimum herum einen nichtverschwindenden Anteil zweiter Ordnung, insbesondere einen nichtverschwindenden quadratischen Anteil, auf.

Somit ist die Funktion bevorzugt eine konvexe Funktion, insbesondere streng konvexe Funktion. Zur Erleichterung des Regelverfahrens ist die Verwendung einer stetig differenzierbaren Funktion vorteilhaft.

### Bezugszeichenliste

1 Reglereinheit, insbesondere PWM-Controller
2 Ansteuerung, insbesondere Treiber
3 Ansteuerung, insbesondere Treiber

Ui Eingangsspannung
U0 Ausgangsspannung
D1 Diode
D2 Diode
M1 erster steuerbarer Schalter, insbesondere Siliziumcarbid-MOSFET
M2 zweiter steuerbarer Schalter, insbesondere Siliziumcarbid-MOSFET
Ci eingangsseitige Kapazität
C0 ausgangsseitige Kapazität, insbesondere Elektrolytkondensator
L1 Induktivität
IL1 durch die Induktivität L1 fließender Strom

## Patentansprüche

1. DC/DC-Wandler, mit eingangsseitigem und ausgangsseitigem Anschluss,
wobei der Wandler ausgestaltet ist, um am eingangsseitigen Anschluss mit einer Eingangsspannung (Ui) gespeist zu werden und am ausgangsseitigen Anschluss eine Ausgangsspannung (Uo) zur Verfügung zu stellen,
wobei am ausgangsseitigen Anschluss eine ausgangsseitige Kapazität (Co) angeschlossen ist,
wobei der Wandler eine Induktivität (L1) aufweist, welche zwischen einem ersten Potential des eingangsseitigen Anschlusses und einem ersten Potential des ausgangsseitigen Anschlusses angeordnet ist,
**wobei**
mittels eines ersten steuerbaren Schalters (M1) eines zweite Potential des ausgangsseitigen Anschlusses über zumindest eine zweite Diode (D2), mit dem zweiten Potential des eingangsseitigen Anschlusses verbindbar ist,
wobei mittels eines zweiten steuerbaren Schalters (M2) das erste Potential des ausgangsseitigen Anschlusses mit dem zweiten Potential des eingangsseitigen Anschlusses verbindbar ist,
wobei eine erste Diode (D1) mit der zweiten Diode (D2) Be in Reihe derart geschaltet ist und diese Reihenschaltung zwischen dem zweiten Potential des ausgangsseitigen Anschlusses und dem ersten Potential des eingangsseitigen Anschlusses angeordnet ist, dass abhängig von der Differenz des zweiten Potentials des ausgangsseitigen Anschlusses zum ersten Potential des eingangsseitigen Anschlusses ein Stromfluss vom zweiten Potential des ausgangsseitigen Anschlusses zum ersten Potential des eingangsseitigen Anschlusses möglich ist, wobei der erste steuerbare Schalter (M1) mit der ersten Diode (D1) eine Reihenschaltung bildet, und
von einer Steuerelektronik
- dem ersten steuerbaren Schalter (M1) M+ ein pulsweitenmoduliertes Ansteuersignal zugeführt wird, wobei das Pulsweitenmodulationsverhältnis von der Reglereinheit derart gestellt wird, dass die Ausgangsspannung auf einen Sollwert **hingeregelt wird** und wobei der zweite steuerbare Schalter (M2) dauerhaft geöffnet ist, wenn die Ausgangsspannung größer als der Sollwert ist,
- dem zweiten steuerbaren Schalter (M2) ein pulsweitenmoduliertes Ansteuersignal zugeführt wird, wobei das Pulsweitenmodulationsverhältnis von der Reglereinheit derart gestellt wird, dass die Ausgangsspannung auf den Sollwert hingeregelt wird und wobei der erste Schalter (M1) dauerhaft geschlossen ist, wenn die Ausgangsspannung kleiner als der Sollwert ist,
- der erste steuerbare Schalter (M1) dauerhaft geschlossen ist und der zweite Schalter (M2) dauerhaft geöffnet ist, wenn die Ausgangsspannung ein zulässiges Maß an Abweichung vom Sollwert nicht überschreitet.

2. Wandler nach Anspruch 1, **dadurch gekennzeichnet, dass** die Reihenschaltung, welche aus dem ersten steuerbaren Schalter (M1) und der ersten Diode (D1) gebildet ist, am eingangsseitigen Anschluss angeordnet und aus der Eingangsspannung gespeist wird.

3. Wandler nach einem der vorangegangenen Ansprüche,
**dadurch gekennzeichnet, dass**
der erste steuerbare Schalter (M1) und der zweite steuerbare Schalter (M2) auf dem zweiten Potential des eingangsseitigen Anschlusses des Wandlers angeordnet sind und/oder auf demselben Potential wie ein Anschlusselement einer eine Reglereinheit aufweisende Steuerelektronik, welche das Ansteuersignal für den ersten steuerbaren Schalter (M1) und das
Ansteuersignal für den zweiten steuerbaren Schalter (M2) erzeugt.

4. Wandler nach einem der vorangegangenen Ansprüche,
**dadurch gekennzeichnet, dass**
ein Anschlusselement des ersten steuerbaren Schalters (M1) und ein Anschlusselement des zweiten steuerbaren Schalters (M2),
das zweite Potential aufweisen und ein Anschlusselement der eine Reglereinheit aufweisenden Steuerelektronik, welche das Ansteuersignal für den ersten steuerbaren Schalter (M1) und das Ansteuersignal für den zweiten steuerbaren Schalter (M2) erzeugt.

5. Wandler nach einem der vorangegangenen Ansprüche,
**dadurch gekennzeichnet, dass**
am eingangsseitigen Anschluss des Wandlers eine als Folienkondensator ausgeführte Kapazität angeordnet ist.

6. Wandler nach einem der vorangegangenen Ansprüche,
**dadurch gekennzeichnet, dass**
die Pulsweitenmodulationsfrequenz als Funktion des Verhältnisses von Eingangsspannung zur Ausgangsspannung verändert wird.

7. Antriebssystem mit Wandler nach einem der vorangegangenen Ansprüche, wobei der eingangsseitige Anschluss des Wandlers parallel verbunden ist mit dem gleichspannungsseitigen Anschluss eines oder mehrerer Wechselrichter des Antriebssystems, insbesondere welche jeweils einen Elektromotor speisen, und/oder mit dem gleichspannugnsseitigen Anschluss eines netzgespeisten Gleichrichters des Antriebssystems.

8. Verfahren zum Betreiben eines Wandlers nach einem der vorangegangenen Ansprüche,
wobei der Wandler eine Induktivität aufweist, welche zwischen einem ersten Potential des eingangsseitigen Anschlusses und einem ersten Potential des ausgangsseitigen Anschlusses angeordnet ist,
wobei
mittels eines ersten steuerbaren Schalters (M1) das zweite Potential des ausgangsseitigen Anschlusses über zumindest eine zweite Diode (D2) mit dem zweiten Potential des eingangsseitigen Anschlusses verbindbar ist,
wobei mittels eines zweiten steuerbaren Schalters (M2) das erste Potential des ausgangsseitigen Anschlusses mit dem zweiten Potential des eingangsseitigen Anschlusses verbindbar ist,
wobei
- dem ersten steuerbaren Schalter (M1) ein pulsweitenmoduliertes Ansteuersignal zugeführt wird, wobei das Pulsweitenmodulationsverhältnis von der Reglereinheit derart gestellt wird, dass die Ausgangsspannung auf einen, insbesondere als Parameter des DC/DC-Wandlers, Sollwert hingeregelt wird und wobei der zweite steuerbare Schalter (M2) dauerhaft geöffnet ist, wenn die Ausgangsspannung größer als der Sollwert ist,
- dem zweiten steuerbaren Schalter (M2) ein pulsweitenmoduliertes Ansteuersignal zugeführt wird, wobei das Pulsweitenmodulationsverhältnis von der Reglereinheit derart gestellt wird, dass die Ausgangsspannung auf den Sollwert hingeregelt wird und wobei der erste Schalter (M1) dauerhaft geschlossen ist, wenn die Ausgangsspannung kleiner als der Sollwert ist,
- der erste steuerbare Schalter (M1) dauerhaft geschlossen ist und der zweite Schalter (M2) dauerhaft geöffnet ist, wenn die Ausgangsspannung ein zulässiges Maß an Abweichung vom Sollwert nicht überschreitet,
**wobei die Pulsweitenmodulationsfrequenz als Funktion des Verhältnisses der ausgangsseitigen Spannung** (Uo) **zur eingangsseitigen Spannung** (Ui) **verändert wird,**
**wobei die Funktion ein Minimum aufweist, wenn das Verhältnis den Wert Eins erreicht, also die ausgangsseitige Spannung** (Uo) der **eingangsseitigen Spannung** (Ui) **gleicht,**
**wobei die Funktion eine konvexe Funktion ist, insbesondere eine streng konvexe Funktion.**

9. Verfahren nach Anspruch 8,
**dadurch gekennzeichnet, dass**
die Funktion eine stetig differenzierbare Funktion ist.

## Claims

1. A DC/DC converter having an input-side and an output-side connection,
wherein the converter is configured to be fed an input voltage (Ui) at the input-side connection and to provide an output voltage(Uo) at the output-side connection,
wherein an output-side capacitor (Co) is connected to the output-side connection,
wherein the converter has an inductor (L1) which is arranged between a first potential of the input-side connection and a first potential of the output-side connection,
wherein
by means of a first controllable switch (M1), a second potential of the output-side connection is connectable via at least one second diode (D2) to the second potential of the input-side connection,
wherein by means of a second controllable switch (M2), the first potential of the output-side connection is connectable to the second potential of the input-side connection,
wherein a first diode (D1) is connected in series with the second diode (D2) in such a manner and this series connection between the second potential of the output-side connection and the first potential of the input-side connection is arranged in such a manner, that a current flow from the second potential of the output-side connection to the first potential of the input-side connection is possible dependent on the difference of the second potential of the output-side connection from the first potential of the input-side connection, wherein the first controllable switch (M1) forms a series connection with the first diode (D1),
and by control electronics
- a pulse-width modulated control signal is supplied to the first controllable switch (M1), wherein the pulse-width modulation ratio is set by the controller unit in such a manner that the output voltage is adjusted to a set value and wherein the second controllable switch (M2) is permanently open when the output voltage is greater than the set value,
- a pulse-width modulated control signal is supplied to the second controllable switch (M2), wherein the pulse-width modulation ratio is set by the controller unit in such a manner that the output voltage is adjusted to the set value and wherein the first switch (M1) is permanently closed when the output voltage is less than the set value,
- the first controllable switch (M1) is permanently closed and the second switch (M2) is permanently open when the output voltage does not exceed a permissible amount of deviation from the set value.

2. A converter according to claim 1, **characterised in that** the series connection, formed from the first controllable switch (M1) and from the first diode (D1), is arranged at the input-side connection and is fed from the input voltage.

3. A converter according to any one of the preceding claims,
**characterised in that**
the first controllable switch (M1) and the second controllable switch (M2) are arranged at the second potential of the input-side connection of the converter and/or at the same potential as a connection element of control electronics having a controller unit, which control electronics generates the control signal for the first controllable switch (M1) and the control signal for the second controllable switch (M2).

4. A converter according to any one of the preceding claims,
**characterised in that**
a connection element of the first controllable switch (M1) and a connection element of the second controllable switch (M2) have the second potential,
and a connection element of the control electronics having a controller unit, which control electronics generates the control signal for the first controllable switch (M1) and the control signal for the second controllable switch (M2).

5. A converter according to any one of the preceding claims,
**characterised in that**
at the input-side connection of the converter there is arranged a capacitor in the form of a film capacitor.

6. A converter according to any one of the preceding claims,
**characterised in that**
the pulse-width modulation frequency is altered as a function of the ratio of input voltage to output voltage.

7. A drive system with converter according to any one of the preceding claims,
wherein the input-side connection of the converter is connected in parallel to the direct-voltage-side connection of one or a plurality of inverters of the drive system, in particular which in each case feed(s) an electric motor, and/or to the direct-voltage-side connection of a mains-fed rectifier of the drive system.

8. A method of operating a converter according to any one of the preceding claims,
wherein the converter has an inductor which is arranged between a first potential of the input-side connection and a first potential of the output-side connection,
wherein
by means of a first controllable switch (M1), the second potential of the output-side connection is connectable to the second potential of the input-side connection via at least one second diode (D2),
wherein by means of a second controllable switch (M2), the first potential of the output-side connection is connectable to the second potential of the input-side connection,
wherein
- a pulse-width modulated control signal is supplied to the first controllable switch (M1), wherein the pulse-width modulation ratio is set by the controller unit in such a manner that the output voltage is adjusted to a set value, in particular as a parameter of the DC/DC converter, and wherein the second controllable switch (M2) is permanently open when the output voltage is greater than the set value,
- a pulse-width modulated control signal is supplied to the second controllable switch (M2), wherein the pulse-width modulation ratio is set by the controller unit in such a manner that the output voltage is adjusted to the set value and wherein the first switch (M1) is permanently closed when the output voltage is less than the set value.
- the first controllable switch (M1) is permanently closed and the second switch (M2) is permanently open when the output voltage does not exceed a permissible amount of deviation from the set value,
wherein the pulse-width modulation frequency is altered as a function of the ratio of the output-side voltage (Uo) to the input-side voltage (Ui),
wherein the function has a minimum when the ratio reaches one in value, therefore the output-side voltage (Uo) is equal to the input-side voltage (Ui),
wherein the function is a convex function, in particular a strictly convex function.

9. A method according to claim 8,
**characterised in that**
the function is a function which is continuously differentiable.

## Revendications

1. Convertisseur CC/CC muni d'une connexion située côté entrée et d'une connexion située côté sortie,
lequel convertisseur est conçu pour être alimenté en une tension d'entrée (Ui) sur la connexion côté entrée, et pour fournir une tension de sortie (Uo) sur la connexion côté sortie,
un condensateur (Co), situé côté sortie, étant raccordé à ladite connexion côté sortie, ledit convertisseur comportant une inductance (L1) interposée entre un premier potentiel de la connexion côté entrée et un premier potentiel de la connexion côté sortie,
sachant
qu'au moyen d'un premier interrupteur commandable (M1), un second potentiel de ladite connexion côté sortie peut être relié, par l'intermédiaire d'au moins une seconde diode (D2), au second potentiel de ladite connexion côté entrée,
sachant qu'au moyen d'un second interrupteur commandable (M2), le premier potentiel de la connexion côté sortie peut être relié au second potentiel de la connexion côté entrée, une première diode (D1) étant branchée en série avec la seconde diode (D2), et ce branchement en série étant interposé entre le second potentiel de ladite connexion côté sortie et le premier potentiel de ladite connexion côté entrée, sachant qu'en fonction de la différence entre le second potentiel de la connexion côté sortie et le premier potentiel de la connexion côté entrée, un flux de courant est possible dudit second potentiel de ladite connexion côté sortie audit premier potentiel de ladite connexion côté entrée, le premier interrupteur commandable (M1) formant alors un branchement en série avec ladite première diode (D1),
et un signal de pilotage à largeur d'impulsion modulée étant délivré audit premier interrupteur commandable (M1) par une électronique de commande, le rapport de modulation de la largeur d'impulsion étant réglé, par l'unité de régulation, de façon telle que la tension de sortie soit régulée pour prendre une valeur de consigne,
et le second interrupteur commandable (M2) étant ouvert durablement lorsque ladite tension de sortie est supérieure à ladite valeur de consigne,
un signal de pilotage à largeur d'impulsion modulée étant délivré audit second interrupteur commandable (M2), le rapport de modulation de la largeur d'impulsion étant réglé, par l'unité de régulation, de façon telle que la tension de sortie soit régulée pour prendre la valeur de consigne, et le premier interrupteur commandable (M1) étant fermé durablement lorsque ladite tension de sortie est inférieure à ladite valeur de consigne, ledit premier interrupteur commandable (M1) étant fermé durablement et ledit second interrupteur commandable (M2) étant ouvert durablement lorsque ladite tension de sortie n'excède pas un degré d'écart admissible par rapport à ladite valeur de consigne.

2. Convertisseur selon la revendication 1, **caractérisé par le fait que** le branchement en série, constitué du premier interrupteur commandable (M1) et de la première diode (D1), se trouve au niveau de la connexion côté entrée et est alimenté par la tension d'entrée.

3. Convertisseur selon l'une des revendications précédentes, **caractérisé par le fait que**
le premier interrupteur commandable (M1) et le second interrupteur commandable (M2) se trouvent au niveau du second potentiel de la connexion côté entrée dudit convertisseur, et/ou du même potentiel qu'un élément de raccordement d'une électronique de commande qui est dotée d'une unité de régulation et qui engendre le signal de pilotage dédié audit premier interrupteur commandable (M1) et le signal de pilotage dédié audit second interrupteur commandable (M2).

4. Convertisseur selon l'une des revendications précédentes, **caractérisé par le fait**
**qu'**un élément de raccordement du premier interrupteur commandable (M1) et un élément de raccordement du second interrupteur commandable (M2) présentent le second potentiel,
et un élément de raccordement de l'électronique de commande qui est dotée d'une unité de régulation et qui engendre le signal de pilotage dédié audit premier interrupteur commandable (M1)
et le signal de pilotage dédié audit second interrupteur commandable (M2).

5. Convertisseur selon l'une des revendications précédentes, **caractérisé par le fait**
**qu'**un condensateur, réalisé sous la forme d'un condensateur à film, est disposé au niveau de la connexion côté entrée dudit convertisseur.

6. Convertisseur selon l'une des revendications précédentes, **caractérisé par le fait que**
la fréquence de modulation de la largeur d'impulsion est modifiée en tant que fonction du rapport de la tension d'entrée vis-à-vis de la tension de sortie.

7. Système d'entraînement pourvu d'un convertisseur conforme à l'une des revendications précédentes,
la connexion située côté entrée dudit convertisseur étant reliée en parallèle à la connexion située côté tension continue d'un ou de plusieurs onduleur(s) dudit système d'entraînement qui alimente(nt) notamment, à chaque fois, un moteur électrique, et/ou à la connexion située côté tension continue d'un redresseur dudit système d'entraînement, alimenté par le réseau.

8. Procédé d'actionnement d'un convertisseur conforme à l'une des revendications précédentes,
lequel convertisseur est muni d'une inductance interposée entre un premier potentiel de la connexion située côté entrée et un premier potentiel de la connexion située côté sortie, sachant
qu'au moyen d'un premier interrupteur commandable (M1),
le second potentiel de ladite connexion côté sortie peut être relié, par l'intermédiaire d'au moins une seconde diode (D2), au second potentiel de ladite connexion côté entrée, sachant qu'au moyen d'un second interrupteur commandable (M2),
le premier potentiel de ladite connexion côté sortie peut être relié audit second potentiel de la connexion côté entrée,
sachant
qu'un signal de pilotage à largeur d'impulsion modulée est délivré audit premier interrupteur commandable (M1), le rapport de modulation de la largeur d'impulsion étant réglé, par l'unité de régulation, de façon telle que la tension de sortie soit régulée pour prendre une valeur de consigne représentant notamment un paramètre du convertisseur CC/CC, et
sachant que le second interrupteur commandable (M2) est ouvert durablement lorsque ladite tension de sortie est supérieure à ladite valeur de consigne,
un signal de pilotage à largeur d'impulsion modulée étant délivré audit second interrupteur commandable (M2), le rapport de modulation de la largeur d'impulsion étant réglé, par l'unité de régulation, de façon telle que la tension de sortie soit régulée pour prendre la valeur de consigne, et le premier interrupteur (M1) étant fermé durablement lorsque ladite tension de sortie est inférieure à ladite valeur de consigne,
ledit premier interrupteur commandable (M1) étant fermé durablement et ledit second interrupteur commandable (M2) étant ouvert durablement lorsque ladite tension de sortie n'excède pas un degré d'écart admissible par rapport à ladite valeur de consigne,
sachant que la fréquence de modulation de la largeur d'impulsion est modifiée en tant que fonction du rapport de la tension de sortie (Uo) vis-à-vis de la tension d'entrée (Ui), laquelle fonction présente un minimum lorsque ledit rapport atteint la valeur « un », c'est-à-dire lorsque ladite tension de sortie (Uo) est égale à ladite tension d'entrée (Ui),
ladite fonction étant une fonction convexe, en particulier une fonction strictement convexe.

9. Procédé selon la revendication 8, **caractérisé par le fait que** la fonction est une fonction différentiable continûment.
